# EUROPEAN PATENT APPLICATION

(11) **EP 1 783 460 A2**
(43) Date of publication of application: **09.05.2007**
(21) Application number: 06022931.7
(22) Date of filing: 03.11.2006
(51) Int. Cl.: G01D 5/12, G01D 3/024

(54) **Angle detector**

(30) Priority: 04.11.2005 JP 2005320437
(71) Applicant: ALPS ELECTRIC CO., LTD., Tokyo 145-8501 (JP)
(72) Inventor: Yuichi, Shonai, Ota-ku Tokyo, 145-8501 (JP); Fujita, Kazuhiko, Ota-ku Tokyo, 145-8501 (JP)
(74) Representative: Klunker . Schmitt-Nilson . Hirsch

(57) **Abstract**

In a state where an angle detector is mounted to a device to be detected, such as a throttle valve in an internal-combustion engine, the device is put into operation so that a detected lower limit and a detected upper limit are obtained from the angle detector. Offset correction values are then determined from a difference between a desired output lower limit desired by an electronic controller and the detected lower limit and a difference between a desired output upper limit desired by the electronic controller and the detected upper limit. Subsequently, an output adjuster performs offset adjustments on the output from the angle detector. Accordingly, the detection output desired by the electronic controller can constantly be obtained without having to adjust the mounting angle of the angle detector.

## Description

### BACKGROUND OF THE INVENTION

### 1. Field of the Invention

The present invention relates to angle detectors that magnetically detect rotation angles, and particularly, to an angle detector that can obtain a detection signal corresponding to an operating angle of a device to be detected with a minimum adjustment process when the angle detector is actually mounted to the device.

### 2. Description of the Related Art

Rotary detectors are used for detecting operating angles of various types of devices. As discussed in Japanese Unexamined Patent Application Publication No. 7-217456, in an internal-combustion engine, an operating angle of a throttle valve is detected by an angle detector, and the detected angle information is sent to an electronic controller. Based on the detected angle information, the electronic controller determines an optimal operating angle for the throttle valve and controls, for example, a motor that opens and closes the throttle valve, whereby the throttle valve can be set to the optimal operating angle.

In the invention set forth in Japanese Unexamined Patent Application Publication No. 7-217456, the angle detector is constituted by a variable resistor having a resistor element disposed on a substrate and a sliding contact that slides on the resistor element in accordance with the operating angle of the throttle valve.

In addition to a variable resistor type, another type of an angle detector is a magnetic detector type which includes a magnet that is openable/closable in response to an opening-closing operation of a throttle valve, and a Hall element that detects the direction of a magnetic field generated by the magnet.

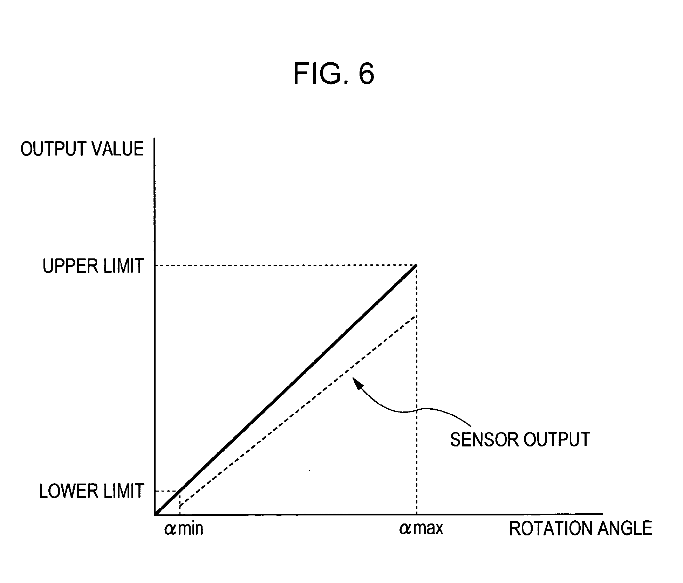

Fig. 6 is a reference diagram illustrating problems occurring when detecting an operating angle of a device to be detected, such as a throttle valve, using an angle detector as in Japanese Unexamined Patent Application Publication No. 7-217456. A device to be detected will be referred to as a subject device hereinafter.

In a case where an angle detector is mounted to a subject device, such as a throttle valve, when the operating angle of the subject device reaches a minimum angle αmin of its operating-angle range (for example, the operating angle at the time of idling of the throttle valve), the angle detector outputs a lower limit of the output signal, as shown with a solid line in Fig. 6. On the other hand, when the operating angle reaches a maximum angle αmax of the operating-angle range (for example, a maximum open angle of the throttle valve), the angle detector outputs an upper limit of the output signal. The output signal of one of the values between the lower limit and the upper limit is then input to an electronic controller so that the electronic controller can recognize the operating condition of the subject device. Therefore, the lower limit of the output signal obtained from the angle detector when the operating angle is at the minimum angle αmin and the upper limit of the output signal obtained from the angle detector when the operating angle is at the maximum angle αmax always have to be fixed values, or in other words, for example, predetermined fixed voltage values.

However, when an angle detector is actually mounted to a subject device, such as a throttle valve, an error in the mounting angle of the angle detector and a structural error in the angle detector that naturally occurs in the course of its manufacture may be observed. As shown with a dash line in Fig. 6, such errors may often cause the minimum and maximum values of the detection signal obtained from the angle detector within the operating-angle range to be inconsistent with the lower limit and the upper limit desired by the electronic controller. For this reason, when mounting the angle detector to the subject device, the mounting angle of the angle detector needs to be finely adjusted by obtaining an actual detection signal, determining a difference between the minimum value of the output signal and the lower limit and a difference between the maximum value of the output signal and the upper limit, and then adjusting the mounting angle to reduce such differences.

The dash line in Fig. 6 also shows that a rate of change from the minimum to maximum values of the detection output obtained from the angle detector (i.e. a rate of change of the detection signal with respect to a change per unit angle) often differs from a rate of change of a signal from the lower limit to the upper limit desired by the electronic controller (i.e. the rate of change shown with the solid line in Fig. 6). In this case, when the minimum value of the detection signal of the angle detector is set in accord with the lower limit, the maximum value of the detection signal will not accord with the upper limit. Therefore, the mounting angle of the angle detector has to be adjusted so that the difference between the minimum value of the detection signal and the lower limit and the difference between the maximum value of the detection signal and the upper limit are both minimized. However, under such a condition, when the subject device operates, the detection signal obtained from the angle detector will constantly differ from the output value originally desired by the electronic controller, thus making it difficult to perform an angle control operation with high precision.

On the other hand, in a case where a magnetic detector type is used as an angle detector, which includes a rotatable magnet and a Hall element that detects the direction of a magnetic field generated by the magnet, a detection signal from the Hall element does not change linearly with respect to an angle change but rather changes in a curving manner. This makes the adjustment for the mounting angle of the angle detector even more difficult.

### SUMMARY OF THE INVENTION

Accordingly, it is an object of the present invention to provide an angle detector that can detect an operating angle of a subject device with high precision without requiring a complicated adjustment process when the angle detector is mounted to the subject device.

The present invention provides an angle detector including a rotary sensor having a magnetic-field generating member and a magnetic sensor element detecting a direction of a magnetic field generated by the magnetic-field generating member, one of the magnetic-field generating member and the magnetic sensor element being rotatable; and an output circuit unit that outputs a signal corresponding to a rotation angle of the rotary sensor. The angle detector is characterized by including an output adjuster which performs at least one of an offset adjustment for setting an output lower limit obtained from the output circuit unit in accord with a desired output lower limit when an output signal obtained from the rotary sensor mounted to a device to be detected reaches one of angle limits of a predetermined operating-angle range and an offset adjustment for setting an output upper limit obtained from the output circuit unit in accord with a desired output upper limit when the output signal obtained from the rotary sensor reaches the other angle limit of the predetermined operating-angle range.

Furthermore, in the present invention, the desired output lower limit and the desired output upper limit may be output values to be sent to an electronic controller in a state where the rotary sensor is mounted to the subject device, the electronic controller controlling the device.

In a state where the angle detector according to the present invention is mounted to the subject device, the subject device is put into operation and an offset adjustment is performed for setting at least one of the output lower limit and the output upper limit of the predetermined operating-angle range output from the output circuit unit in accord with the desired output lower limit or the desired output upper limit. Therefore, with respect to at least one of the lower limit and the upper limit in the predetermined operating-angle range of the subject device, an output signal of a value desired by an electronic controller for controlling the subject device can be obtained without adjusting the mounting angle of the angle detector.

Furthermore, the angle detector according to the present invention may further include a storage portion for storing the desired output lower limit and the desired output upper limit, and a controller that calculates at least one of an offset value corresponding to a difference between the output lower limit and the desired output lower limit and an offset value corresponding to a difference between the output upper limit and the desired output upper limit. The output adjuster may perform the at least one of the offset adjustments based on the at least one of the offset values.

Furthermore, the angle detector according to the present invention may further include storage means for storing the desired output lower limit, the desired output upper limit, and a sensitivity correction value determined from the operating-angle range. The output adjuster may correct a rate of change in the output signal from the output lower limit to the output upper limit on the basis of the sensitivity correction value when the rotary sensor is mounted to the subject device.

Accordingly, the sensitivity correction value is stored in the storage means, and the rate of change with respect to an angle change in the output signal obtained from the output circuit unit can be corrected. Moreover, the offset value of one of the output lower limit and the output upper limit is adjusted so that both the output lower limit and the output upper limit can be set in accord with the desired output lower limit and the desired output upper limit.

Furthermore, the angle detector according to the present invention may further include an input portion for performing a clamping operation when the rotary sensor is set at the one of angle limits of the predetermined operating-angle range or at the other angle limit of the predetermined operating-angle range in a state where the rotary sensor is mounted to the subject device. The output signal obtained from the output circuit unit when the clamping operation is performed may be the output lower limit or the output upper limit based on which an offset value is determined.

According to the above, at least one of the output lower limit and the output upper limit can be set in accord with the desired output lower limit or the desired output upper limit by simply actuating the subject device and performing a clamping operation when the operating angle reaches the lower limit or the upper limit of the predetermined operating-angle range. Accordingly, this eliminates the need for adjusting the mounting angle of the angle detector.

Furthermore, the angle detector according to the present invention may further include storage means for storing the desired output lower limit and the desired output upper limit, and a controller which calculates a sensitivity correction value from the desired output lower limit and the desired output upper limit, the sensitivity correction value corresponding to a rate of change in the output signal for every angle change within the operating-angle range of the rotary sensor. The controller may correct the rate of change in the output signal from the output lower limit to the output upper limit on the basis of the sensitivity correction value.

According to the above, the controller can calculate the sensitivity correction value by setting the subject device to limit positions of the predetermined operating-angle range and then detecting the output lower limit and the output upper limit. Since the rate of change in the output signal is corrected on the basis of the sensitivity correction value, both the output lower limit and the output upper limit can be set respectively in accord with the desired output lower limit and the desired output upper limit by performing an offset adjustment for only one of the output lower limit and the output upper limit.

Furthermore, in the present invention, the sensitivity correction value calculated by the controller may be stored in the storage means.

Furthermore, in the present invention, the magnetic sensor element may utilize a magnetoresistance effect, the magnetic sensor element being disposed such as to have a capability to detect the magnetic field from orthogonal directions.

The use of a magnetic sensor element that utilizes a magnetoresistance effect allows the rate of change from the output lower limit to the output upper limit obtained from the output circuit unit to be a linear function or similar to a linear function.

Accordingly, in a state where the angle detector of the present invention is mounted to a subject device, the angle detector can obtain an accurate output signal corresponding to an operating-angle range of the subject device without requiring a complicated adjustment process.

### BRIEF DESCRIPTION OF THE DRAWINGS

Fig. 1 is a front view of a rotary sensor provided in an angle detector according to a first embodiment of the present invention;
Fig. 2 is a circuit block diagram of the angle detector;
Fig. 3 illustrates a throttle valve having the angle detector mounted thereto;
Fig. 4 is an operation diagram of the angle detector according to the first embodiment;
Fig. 5 is an operation diagram of an angle detector according to a second embodiment of the present invention; and
Fig. 6 illustrates problems existing in a conventional angle detector.

### DESCRIPTION OF THE PREFERRED EMBODIMENTS

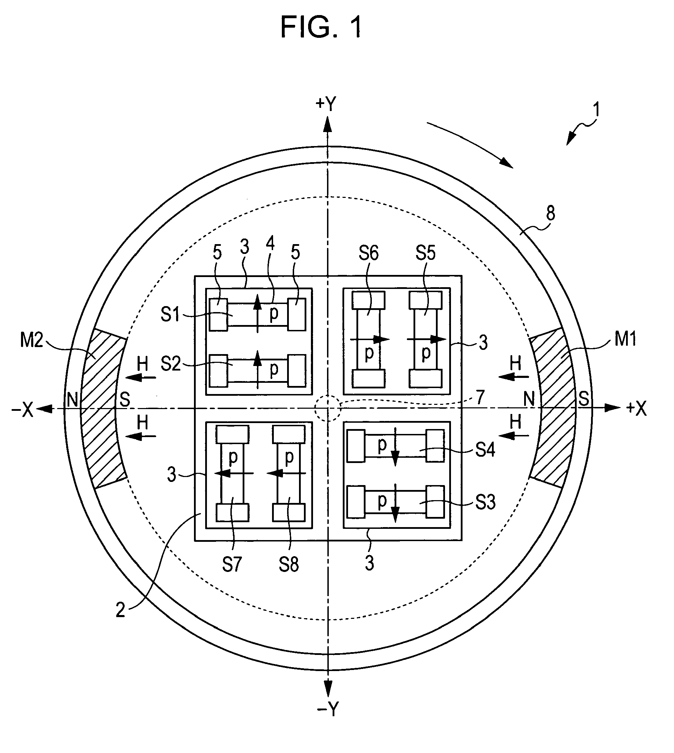

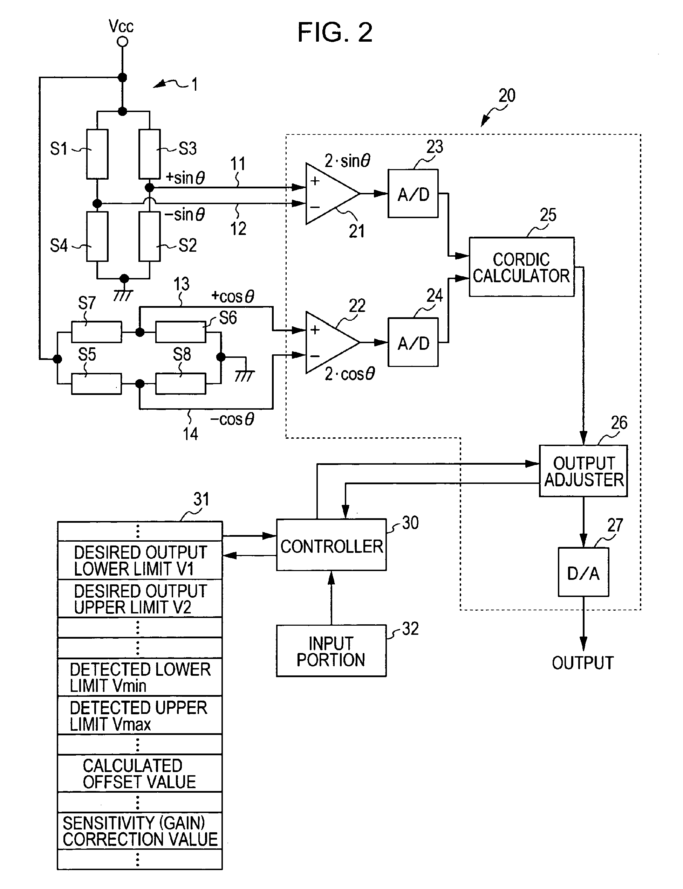

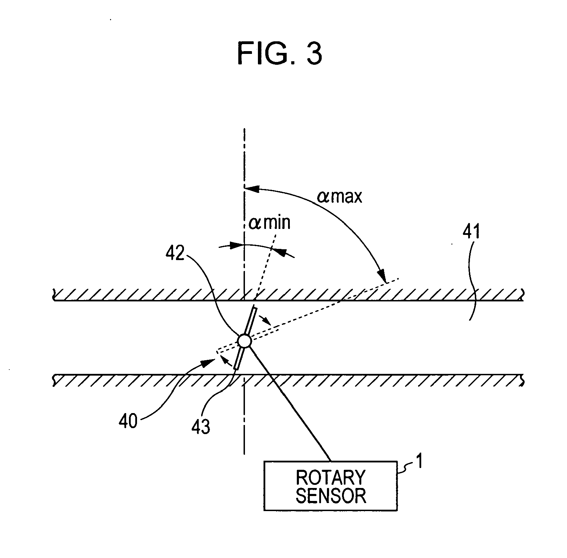

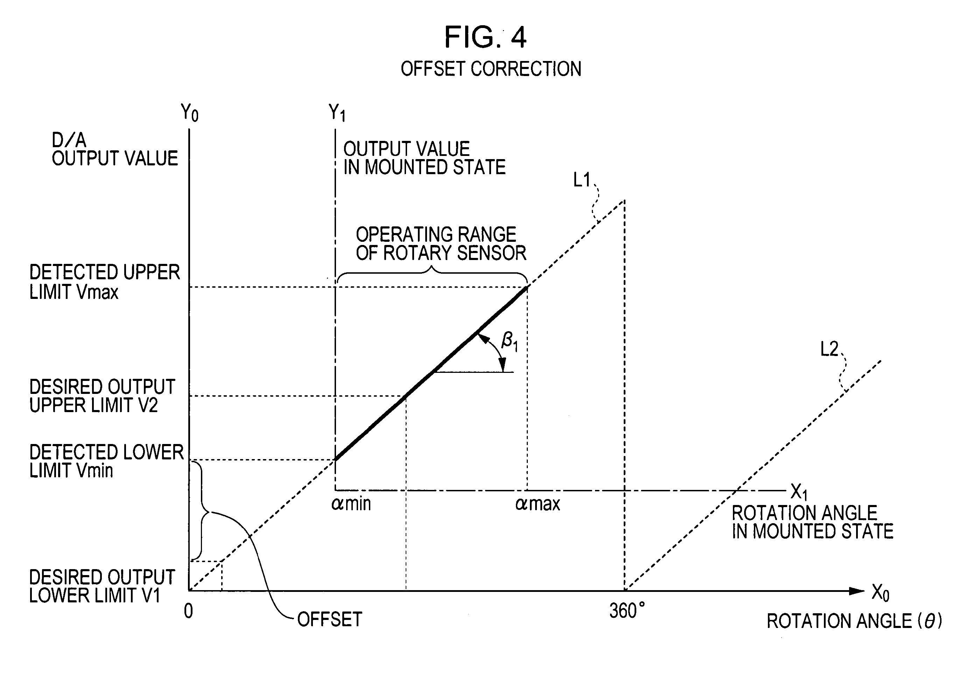

Fig. 1 is a front view of a rotary sensor included in an angle detector according to a first embodiment of the present invention. Fig. 2 is a circuit block diagram of the angle detector. Fig. 3 illustrates a state where the rotary sensor is mounted to a throttle valve which is an example of a device to be detected, which will simply be referred to as a subject device hereinafter. Fig. 4 is an operation diagram of the angle detector.

A rotary sensor 1 shown in Fig. 1 has a stationary base 2 on which four substrates 3 are mounted. Each of the substrates 3 is provided with two magnetic sensor elements. In Fig. 1, the magnetic sensor elements are indicated by reference numerals S1, S2, S3, S4, S5, S6, S7, and S8. Specifically, a pair of magnetic sensor elements S1 and S2 is provided on the first substrate 3, a pair of magnetic sensor elements S3 and S4 on the second substrate 3, a pair of magnetic sensor elements S5 and S6 on the third substrate 3, and a pair of magnetic sensor elements S7 and S8 on the fourth substrate 3.

Since the magnetic sensor elements all have the same structure, the structure thereof will be described below by referring only to the magnetic sensor element S1. The magnetic sensor element S1 utilizes a giant magnetoresistance effect and is disposed as a thin film on the corresponding substrate 3. The magnetic sensor element S1 includes a detecting portion 4 and electrode portions 5 disposed on opposite sides of the detecting portion 4. The detecting portion 4 is a laminate including a fixed magnetic layer and a free magnetic layer. The fixed magnetic layer is a ferromagnetic layer composed of, for example, a Co-Fe alloy (cobalt-iron alloy) or Ni-Fe alloy (nickel-iron alloy), and is stacked on an antiferromagnetic layer composed of, for example, a Pt-Mn alloy (platinum-manganese alloy) or Ir-Mn alloy (iridium-manganese alloy). Due to an exchange coupling magnetic field generated between the antiferromagnetic layer and the fixed magnetic layer, the magnetization direction of the fixed magnetic layer is fixed unidirectionally. The free magnetic layer is a ferromagnetic layer composed of, for example, an Ni-Fe alloy. The free magnetic layer and the fixed magnetic layer are laminated with a non-magnetic material layer, such as a Cu layer (copper layer), interposed therebetween.

In the magnetic sensor element S1, the free magnetic layer reacts to a magnetic field from the outside (i.e. an external magnetic field H), such that the magnetization direction of the free magnetic layer becomes oriented in the direction of the external magnetic field H. When the magnetization direction of the free magnetic layer is oriented in the same direction as the fixed magnetization direction of the fixed magnetic layer, an electric resistance value is at minimum. In contrast, when the magnetization direction of the free magnetic layer is oriented in a direction opposite to the fixed magnetization direction of the fixed magnetic layer, the electric resistance value is at maximum.

In Fig. 1, the fixed magnetization direction of the fixed magnetic layer in each of the magnetic sensor elements S1 to S8 is indicated by an arrow P. The fixed magnetization direction of the fixed magnetic layer in each of the magnetic sensor elements S1 and S2 is oriented in a +Y direction. The fixed magnetization direction of the fixed magnetic layer in each of the magnetic sensor elements S3 and S4 is oriented in a -Y direction. The fixed magnetization direction of the fixed magnetic layer in each of the magnetic sensor elements S5 and S6 is oriented in a +x direction. The fixed magnetization direction of the fixed magnetic layer in each of the magnetic sensor elements S7 and S8 is oriented in a -X direction. The X and Y directions represent coordinate axes that are orthogonal to each other.

In the center of the arrangement of the magnetic sensor elements S1 to S8 on the stationary base 2 is provided an axis 7, such that a rotary member 8 is rotatable around the axis 7. The rotary member 8 has a first magnet M1 and a second magnet M2 fixed thereon, which serve as magnetic-field generating members. The first magnet M1 is magnetized such that its inner face that faces the axis 7 is an N-pole. On the other hand, the second magnet M2 is magnetized such that its inner face that faces the axis 7 is an S-pole. Thus, the magnetic field H that is oriented from the first magnet M1 towards the second magnet M2 is generated. The magnetic field H is capable of crossing over all the magnetic sensor elements S1 to S8 in the same direction.

The rotary sensor 1 has the stationary base 2 fixed thereon, and the rotary member 8 is attached to a rotary portion of the subject device. Thus, the rotary member 8 rotates in accordance with the operating angle of the subject device. This changes a relative angle between the stationary base 2 and the rotary member 8, thus changing the direction of the magnetic field H crossing over the magnetic sensor elements S1 to S8. When the rotary member 8 is at a rotational phase shown in Fig. 1, the magnetic field H is oriented in the -X direction from the first magnet M1 towards the second magnet M2. In this state, the electric resistance values of the magnetic sensor elements S7 and S8 are at minimum, whereas the electric resistance values of the magnetic sensor elements S5 and 56 are at maximum. On the other hand, the electric resistance values of the magnetic sensor elements S1 and S2 are intermediate values between the minimum values and the maximum values. Similarly, the electric resistance values of the magnetic sensor elements S3 and S4 are also intermediate values between the minimum values and the maximum values.

When the rotary member 8 rotates clockwise by 90° from the rotational phase shown in Fig. 1, the magnetic field H becomes oriented in the +Y direction from the first magnet M1 towards the second magnet M2. In this state, the electric resistance values of the magnetic sensor elements S1 and S2 are at minimum, whereas the electric resistance values of the magnetic sensor elements S3 and S4 are at maximum. On the other hand, the electric resistance values of the magnetic sensor elements S5 and S6 are intermediate values between the minimum values and the maximum values. Similarly, the electric resistance values of the magnetic sensor elements S7 and S8 are also intermediate values between the minimum values and the maximum values.

Referring to Fig. 2, the magnetic sensor elements S1 and S4 whose fixed magnetization directions of the fixed magnetic layers are different from each other by 180° are connected in series, and similarly, the magnetic sensor elements S3 and S2 whose fixed magnetization directions of the fixed magnetic layers are different from each other by 180° are also connected in series. The magnetic sensor elements S1 and S3 are connected to a power supply voltage Vcc, and the magnetic sensor elements S4 and S2 are positioned proximate to the ground. Furthermore, the magnetic sensor elements S5 and S8 whose fixed magnetization directions of the fixed magnetic layers are different from each other by 180° are connected in series, and similarly, the magnetic sensor elements S7 and S6 whose fixed magnetization directions of the fixed magnetic layers are different from each other by 180° are also connected in series. The magnetic sensor elements S5 and S7 are connected to the power supply voltage Vcc, and the magnetic sensor elements S8 and S6 are positioned proximate to the ground.

An intermediate line 11 is connected to an intermediate point between the magnetic sensor element S3 and the magnetic sensor element S2. In response to a rotation of the rotary member 8 of the rotary sensor 1, a detection signal that changes in the form of a trigonometric function or in a form similar to a trigonometric function is output to the intermediate line 11 as a voltage value. In Fig. 2, a voltage change in the detection signal obtained by the intermediate line 11 is defined as "+sinθ". Furthermore, an intermediate line 12 is connected to an intermediate point between the magnetic sensor element S1 and the magnetic sensor element S4. In the intermediate line 12, a detection signal whose phase is different from that in the intermediate line 11 by 180° is obtained as a voltage change. In Fig. 2, the voltage change in the detection signal obtained by the intermediate line 12 is defined as "-sinθ". Furthermore, an intermediate line 13 is connected to an intermediate point between the magnetic sensor element S7 and the magnetic sensor element S6. In the intermediate line 13, a voltage change whose phase is different from that of the voltage change in the intermediate line 11 by 90° is obtained. In Fig. 2, the voltage change in the detection signal obtained by the intermediate line 13 is defined as "+cosθ". Furthermore, an intermediate line 14 is connected to an intermediate point between the magnetic sensor element S5 and the magnetic sensor element S8. A voltage change in an output signal from the intermediate line 14 is defined as "-cosθ".

The detection signals obtained by the intermediate lines 11, 12, 13, 14 are sent to an output circuit unit 20. The output circuit unit 20 includes differential amplifiers 21 and 22. The output signal from the differential amplifier 21 is sent to an A/D (analog-to-digital) converter 23, while the output signal from the differential amplifier 22 is sent to an A/D converter 24. The differential amplifier 21 determines a difference between the output signal from the intermediate line 11 and the output signal from the intermediate line 12. Consequently, the output signal from the differential amplifier 21 also changes in the form of a trigonometric function or in a form similar to a trigonometric function. In Fig. 2, a voltage change in the output signal from the differential amplifier 21 is defined as "2·sinθ". On the other hand, the differential amplifier 22 determines a difference between the output signal from the intermediate line 13 and the output signal from the intermediate line 14, whereby an output signal defined as "2·cosθ" is obtained.

The output signal from the differential amplifier 21 is converted to a digital signal by the A/D converter 23 and is then sent to a calculator 25. Similarly, the output signal from the differential amplifier 22 is converted to a digital signal by the A/D converter 24 and is then sent to the calculator 25. The calculator 25 calculates a function of the A/D-converted "sinθ" and a function of the A/D-converted "cosθ" on the basis of a CORDIC algorithm, and determines an "arc tan" function which is an inverse trigonometric function. The function determined by the calculator 25 is sent to an output adjuster 26, and then to a D/A (digital-to-analog) converter 27 where the function is converted to an analog value. The analog value is finally output as a voltage value.

In accordance with the "arc tan" function determined by the calculator 25, while the rotary member 8 of the rotary sensor 1 makes one rotation, the output voltage from the D/A converter 27 changes proportionally to the angle change of the rotary member 8, or in other words, changes in the form of a linear function or in a form similar to a linear function with respect to the angle change of the rotary member 8.

The output adjuster 26 included in the output circuit unit 20 adjusts the sensitivity and the level of a signal that changes in the form of a linear function or in a form similar to a linear function determined by the calculator 25. This adjustment is controlled on the basis of calculation results by a controller 30. The controller 30 is connected to a readable/writable memory (RAM) 31 serving as storage means. Moreover, the controller 30 is accessible via an input portion 32 for inputting a clamp operating signal.

Fig. 3 illustrates a state where the rotary sensor 1 is mounted to a throttle valve 40 in an internal-combustion engine, which is an example of the subject device.

The throttle valve 40 includes a rotary shaft 42 and a valve portion 43 fixed to the rotary shaft 42. The valve portion 43 opens and closes an intake channel 41 for an air-fuel mixture containing fuel and air. In an internal-combustion engine installed in a vehicle, when the valve portion 43 reaches a minimum open angle αmin while the engine is operating, the engine idles. On the other hand, when the valve portion 43 reaches a maximum open angle αmax, which is about 85°, the engine is at full throttle. The rotary shaft 42 is rotated by a driving force of a motor.

The throttle valve 40 is controlled by an electronic controller equipped with a microcomputer. An operating angle of an accelerator pedal operated by a driver is detected by the angle detector, and is then recognized by the electronic controller. In response to a command from the electronic controller, the motor is controlled to rotate the rotary shaft 42 so as to set the open angle of the valve portion 43. The set open angle of the valve portion 43 is detected by the rotary sensor 1. In other words, the rotary member 8 of the rotary sensor 1 shown in Fig. 1 is linked to the rotary shaft 42, such that the rotational phase of the rotary member 8 is determined in accordance with the open angle of the valve portion 43. Then, the rotation angle of the rotary member 8, that is, the open angle of the valve portion 43, is output as a voltage value from the D/A converter 27 in the output circuit unit 20, and this output voltage value is sent to the electronic controller.

The electronic controller determines an open angle for the valve portion 43 that allows for good combustion efficiency of fuel on the basis of the detection output of the operating angle of the accelerator pedal and the voltage value obtained from the output circuit unit 20, whereby the open angle of the valve portion 43 is controlled to an optimal value.

In order to control the angle of the valve portion 43 with high precision using the electronic controller, an accurate voltage value corresponding to the open angle of the valve portion 43 must be output from the D/A converter 27 in the output circuit unit 20. Specifically, when the valve portion 43 is set at the minimum open angle αmin at the time of idling, a preliminarily determined voltage V1 must be output and sent to the electronic controller, whereas when the valve portion 43 is set at the maximum open angle αmax, a preliminarily determined voltage V2 must be output and sent to the electronic controller. The voltage V1 is a desired output lower limit corresponding to the minimum open angle α min of the valve portion 43 desired by the electronic controller, and the voltage V2 is a desired output upper limit corresponding to the maximum open angle αmax of the valve portion 43.

Conventionally, it is necessary to adjust the mounting angle of the rotary sensor 1 in order to output the desired output lower limit V1 from the output circuit unit 20 when the open angle of the valve portion 43 is at the minimum open angle αmin and to output the desired output upper limit V2 from the output circuit unit 20 when the open angle of the valve portion 43 is at the maximum open angle αmax. This adjustment is implemented by setting the valve portion 43 to the minimum open angle αmin or the maximum open angle αmax after mounting the rotary sensor 1 to the rotary shaft 42 and then adjusting the mounting angle of the rotary sensor 1 with respect to the rotary shaft 42 in view of a difference between the output voltage obtained from the angle detector in this state and the desired output lower limit V1 or desired output upper limit V2.

In contrast, according to the angle detector of the first embodiment of the present invention, in a state where the rotary sensor 1 is mounted to the throttle valve 40 shown in Fig. 3, which is the subject device, the electronic controller is capable of receiving the desired output lower limit V1 and the desired output upper limit V2 or an output signal of a value extremely close to these values from the D/A converter 27 in the output circuit unit 20 without requiring a fine adjustment of the mounting angle.

Referring to Fig. 4, orthogonal coordinates of an X₀ axis and a Yo axis indicated by solid lines show variation characteristics of the voltage output from the angle detector. The X0 axis represents the rotation angle (degree) of the rotary member 8 of the rotary sensor 1, and the Yo axis represents the output voltage from the D/A converter 27. In response to a rotation of the rotary member 8 of the rotary sensor 1, when the rotation angle thereof is within a range of 0° to 360°, the output voltage from the D/A converter 27 changes along a line L1 in the form of a linear function or in a form similar to a linear function in accordance with the angle change. When the rotation angle is within a range of 360° to 720°, the output voltage changes along a line L2 having the same inclination as the line L1.

Orthogonal coordinates of an X₁ axis and a Y₁ axis indicated by chain lines in Fig. 4 correspond to a state where the rotary sensor 1 of the angle detector is actually mounted to the rotary shaft 42 of the throttle valve 40. Here, a detected lower limit output from the D/A converter 27 when the valve portion 43 is at the minimum open angle αmin is indicated by Vmin, and a detected upper limit output from the D/A converter 27 when the valve portion 43 is at the maximum open angle αmax is indicated by Vmax.

In Fig. 4, the X₁-Y₁ coordinates corresponding to the mounted state of the angle detector are not aligned with the X0-Y0 coordinates. This misalignment corresponds to how much the mounting angle of the rotary sensor 1 is misaligned with respect to the rotary shaft 42. As a result of the rotary sensor 1 of the angle detector being misaligned from an ideal mounting position, the detected lower limit Vmin when the valve portion 43 is at the minimum open angle αmin is not equal to the desired output lower limit V1 to be input to the electronic controller, and the detected upper limit Vmax when the valve portion 43 is at the maximum open angle αmax is not equal to the desired output upper limit V2 to be input to the electronic controller.

In order to deal with such obviously assumable misalignment in the mounting angle of the rotary sensor 1, the controller 30 performs the following control operation so that the output signal of the "arc tan" function determined by the calculator 25 is adjusted in the output adjuster 26.

First, the desired output lower limit V1 and the desired output upper limit V2 that are to be preliminarily input to the electronic controller are written and stored in the memory 31. Moreover, a sensitivity (gain) correction value is also preliminarily written and stored in the memory 31. This sensitivity correction value is determined from an operating-angle range (αmax - αmin) of the rotary sensor 1, the desired output lower limit V1, and the desired output upper limit V2, and is equal to a rate of change in the output voltage corresponding to a change per unit angle, which is determined from (V2 - V1)/(αmax - αmin). The sensitivity correction value is preliminarily determined and written in the memory 31 by operating the input portion 32.

The controller 30 sends a correction signal to the output adjuster 26 based on the sensitivity correction value. The output adjuster 26 adjusts the gain of the output change in the "arc tan" function obtained from the calculator 25 based on the sensitivity correction value. As a result, as shown in Fig. 4, the rate of change corresponding to the angle change of the voltage output from the D/A converter 27 is set to an angle β1 that corresponds to (V2 - V1)/(αmax - αmin).

In a state where the angle detector, in which the sensitivity is corrected in the output adjuster 26 based on the sensitivity correction value, is mounted to the throttle valve 40, the internal-combustion engine is actually put into operation. When the valve portion 43 is set to the minimum open angle αmin, which is optimal for idling, the input portion 32 is operated so as to send a clamp signal to the controller 30. When the controller 30 receives the clamp signal, the controller 30 detects the detected lower limit Vmin, which is a signal output from the calculator 25, and writes the detected lower limit Vmin in the memory 31. Furthermore, the internal-combustion engine is actually put into operation and the open angle of the valve portion 43 is set at full throttle and to the maximum open angle αmax for optimal combustion efficiency. In this state, the input portion 32 is operated so as to send a clamp signal to the controller 30. When the controller 30 receives the clamp signal, the controller 30 detects the detected upper limit Vmax output from the calculator 25 and writes the detected upper limit Vmax in the memory 31.

The controller 30 determines an offset value from the detected lower limit Vmin, the detected upper limit Vmax, the desired output lower limit V1, and the desired output upper limit V2 that are clamped and stored in the memory 31, and writes the determined offset value in the memory 31.

The offset value can be determined simply from a difference between the detected lower limit Vmin and the desired output lower limit V1, or simply from a difference between the detected upper limit Vmax and the desired output upper limit V2. Alternatively, the offset value may be determined from the average of the difference between the detected lower limit Vmin and the desired output lower limit V1 and the difference between the detected upper limit Vmax and the desired output upper limit V2. If the offset value is determined only from the difference between the detected lower limit Vmin and the desired output lower limit V1, the clamp inputting operation for writing the detected upper limit Vmax into the memory 31 does not necessarily have to be performed. Likewise, if the offset value is determined only from the difference between the detected upper limit Vmax and the desired output upper limit V2, the clamp inputting operation for writing the detected lower limit Vmin into the memory 31 does not necessarily have to be performed.

After performing the clamp inputting operation via the input portion 32 and storing the offset value determined by the controller 30 in the memory 31, the valve portion 43 is rotated, whereby the rotary member 8 of the rotary sensor 1 is rotated. Subsequently, the calculator 25 performs calculations on the output signals from the rotary sensor 1, and the output adjuster 26 then performs a gain adjustment based on the sensitivity correction value and an offset adjustment based on the offset value. Accordingly, when the valve portion 43 is at the minimum open angle αmin, the desired output lower limit V1 desired by the electronic controller is output from the D/A converter 27, whereas, when the valve portion 43 is at the maximum open angle αmax, the desired output upper limit V2 desired by the electronic controller is output from the D/A converter 27.

The magnetic sensor elements S1 to S8 included in the rotary sensor 1 utilize a magnetoresistance effect and are arranged such as to have a capability to detect a magnetic field from two orthogonal directions. Therefore, an output value of an "arc tan" function that changes substantially in the form of a linear function with respect to an angle change can be obtained from the calculator 25. Accordingly, even when the open angle of the valve portion 43 is set at an intermediate angle between αmin and αmax, an output signal of an accurately detected angle can be obtained.

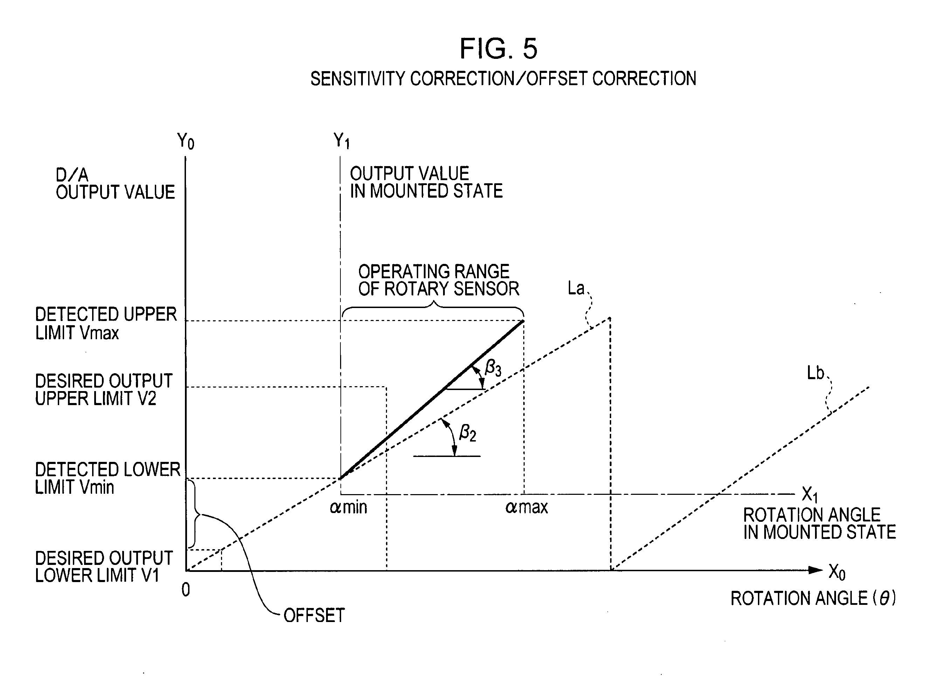

Fig. 5 illustrates an operation of an angle detector according to a second embodiment of the present invention.

In the angle detector according to the first embodiment shown in Fig. 4, the sensitivity (gain) correction value is preliminarily input via the input portion 32 so as to be stored in the memory 31. At a point where the angle detector is mounted to the throttle valve 40, an output after a sensitivity correction (inclination correction of an output change) has been performed is obtained from the output adjuster 26. When a detected lower limit Vmin and/or a detected upper limit Vmax is/are obtained, the input portion 32 is operated so as to input a clamp signal to the controller 30. Subsequently, an offset value is determined.

In contrast, in the angle detector according to the second embodiment shown in Fig. 5, although the desired output lower limit V1 and the desired output upper limit V2 are preliminarily written in the memory 31, the sensitivity correction value and the offset correction value are not written in the memory 31. Consequently, immediately after the angle detector is mounted to a throttle valve, which is a subject device, an output signal from the calculator 25 is not adjusted in the output adjuster 26.

Therefore, in addition to the detected lower limit Vmin, obtained when the valve portion 43 is set at the minimum open angle αmin, not being equal to the desired output lower limit V1 and the detected upper limit Vmax, obtained when the valve portion 43 is set at the maximum open angle αmax, not being equal to the desired output upper limit V2, the output sensitivity from the angle detector (i.e. the rate of output change corresponding to a change per unit angle : an inclination angle β2 of a line La in Fig. 5) is also not equal to the output sensitivity of a signal to be input to the electronic controller (i.e. desired output sensitivity : an inclination angle β3 in Fig. 5).

Likewise in this case, after mounting the angle detector to the throttle valve 40, when the internal-combustion engine is actually put into operation and the valve portion 43 is set to the minimum open angle αmin, the input portion 32 is operated so as to send a clamp signal to the controller 30. The detected lower limit Vmin obtained from the calculator 25 in this state is written in the memory 31. On the other hand, when the valve portion 43 is set to the maximum open angle αmax, the input portion 32 is operated so as to send a clamp signal to the controller 30. The detected upper limit Vmax obtained from the calculator 25 in this state is written in the memory 31.

The controller 30 determines a difference between the sensitivity (angle β2) of the current output signal and the sensitivity [angle β3: (V2 - V1)/(αmax - αmin)] of the output signal to be input to the electronic controller on the basis of the written detected lower limit Vmin, the written detected upper limit Vmax, the desired output lower limit V1, and the desired output upper limit V2. The controller 30 then calculates a sensitivity (gain) correction value used for correcting the sensitivity of the current output signal to the sensitivity of the output signal to be input to the electronic controller. The calculated value is written in the memory 31.

Furthermore, the controller 30 also determines an offset value from the detected lower limit Vmin and the desired output lower limit V1 in the same manner as in the first embodiment and writes the offset value in the memory 31.

Subsequently, the output adjuster 26 performs a sensitivity correction and an offset correction on the output signal from the calculator 25 on the basis of the sensitivity correction value and the offset correction value stored in the memory 31. The signal is then output from the D/A converter 27.

In the second embodiment, the desired output lower limit V1 and the desired output upper limit V2 are written in the memory 31, and when at least two output signals are obtained after the angle detector is mounted to the subject device, the input portion 32 is operated so as to simply send a clamp signal to the controller 30. Subsequently, an output signal to be input to the electronic controller can be readily obtained from the angle detector.

The above embodiments are directed to a case where the subject device is defined by a throttle valve in an internal-combustion engine. Alternatively, the angle detector according to the present invention may be used for detecting, for example, an operation angle of an accelerator pedal of a vehicle, a rotation angle of a steering wheel of a vehicle, or an angle of a set position of a seat within a vehicle.

In any of the above cases, when the angle detector is mounted to the subject device, the mounting position of the angle detector does not need to be finely adjusted. By actually putting the subject device into operation and then simply performing a clamping operation via the input portion 32, an accurate output value corresponding to the operating angle of the subject device can be obtained from the angle detector and be sent to the electronic controller.

Furthermore, the detected lower limit Vmin and the detected upper limit Vmax do not necessarily have to be lower and upper limits of an operating-angle range of the subject device, such as a throttle valve. For example, an intermediate operating-angle range between the minimum value αmin and the maximum value αmax for the operating angle of a subject device, such as a throttle valve, may be set as a detection range. In that case, the output lower limit and the output upper limit of that detection range may respectively be set as the detected lower limit Vmin and the detected upper limit Vmax, and output values corresponding to these limits may be set as the desired output lower limit V1 and the desired output upper limit V2.

Furthermore, the rotary sensor 1 may alternatively have the magnets M1 and M2 on the stationary side thereof and the magnetic sensor elements S1 to S8 on the rotary side thereof.

## Claims

1. An angle detector including a rotary sensor having a magnetic-field generating member and a magnetic sensor element detecting a direction of a magnetic field generated by the magnetic-field generating member, one of the magnetic-field generating member and the magnetic sensor element being rotatable; and an output circuit unit that outputs a signal corresponding to a rotation angle of the rotary sensor,
wherein the angle detector is **characterized by** comprising an output adjuster which performs at least one of an offset adjustment for setting an output lower limit obtained from the output circuit unit in accord with a desired output lower limit when an output signal obtained from the rotary sensor mounted to a device to be detected reaches one of angle limits of a predetermined operating-angle range and an offset adjustment for setting an output upper limit obtained from the output circuit unit in accord with a desired output upper limit when the output signal obtained from the rotary sensor reaches the other angle limit of the predetermined operating-angle range.

2. The angle detector according to Claim 1, wherein the desired output lower limit and the desired output upper limit are output values to be sent to an electronic controller in a state where the rotary sensor is mounted to said device, the electronic controller controlling said device.

3. The angle detector according to Claim 1 or 2, further comprising a storage portion for storing the desired output lower limit and the desired output upper limit, and a controller that calculates at least one of an offset value corresponding to a difference between the output lower limit and the desired output lower limit and an offset value corresponding to a difference between the output upper limit and the desired output upper limit, and wherein the output adjuster performs said at least one of the offset adjustments based on said at least one of the offset values.

4. The angle detector according to any of Claims 1-3, further comprising storage means for storing the desired output lower limit, the desired output upper limit, and a sensitivity correction value determined from the operating-angle range,
wherein the output adjuster corrects a rate of change in the output signal from the output lower limit to the output upper limit on the basis of the sensitivity correction value when the rotary sensor is mounted to said device.

5. The angle detector according to any of Claims 1-4, further comprising an input portion for performing a clamping operation when the rotary sensor is set at said one of angle limits of the predetermined operating-angle range or at said other angle limit of the predetermined operating-angle range in a state where the rotary sensor is mounted to said device,
wherein the output signal obtained from the output circuit unit when the clamping operation is performed comprises the output lower limit or the output upper limit based on which an offset value is determined.

6. The angle detector according to Claims 1-5, further comprising storage means for storing the desired output lower limit and the desired output upper limit, and a controller which calculates a sensitivity correction value from the desired output lower limit and the desired output upper limit, the sensitivity correction value corresponding to a rate of change in the output signal for every angle change within the operating-angle range of the rotary sensor,
wherein the controller corrects the rate of change in the output signal from the output lower limit to the output upper limit on the basis of the sensitivity correction value.

7. The angle detector according to Claim 6, wherein the sensitivity correction value calculated by the controller is stored in the storage means.

8. The angle detector according to Claims 1-7, wherein the magnetic sensor element utilizes a magnetoresistance effect, the magnetic sensor element being disposed such as to have a capability to detect the magnetic field from orthogonal directions.
